# EUROPEAN PATENT APPLICATION

(11) **EP 4 664 192 A1**
(43) Date of publication of application: **17.12.2025**
(21) Application number: 25182061.9
(22) Date of filing: 11.06.2025
(51) Int. Cl.: G02F 1/01, G02F 1/11, H01S 3/13, H01S 3/00, H01S 3/083, G01N 21/39

(54) **SYSTEMS FOR THE TRANSFER OF STABILITY FROM AN OPTICAL TO A RF SOURCE**

(30) Priority: 14.06.2024 IT 202400013720
(71) Applicant: Menchetti, Marco, 50063 Firenze (IT)
(72) Inventor: Menchetti, Marco, 50063 Firenze (IT)
(74) Representative: ip21 Ltd

(57) **Abstract**

A system for transferring stability from an optical to a RF source, the system comprises:
- a light source (101, 201, 301, 401, 501, 601) for generating a light beam,
- a light splitting device (102, 202, 302, 402, 520, 620) for splitting the light beam into two beams,
- a phase modulator (103, 203, 303, 403) for modulating a first one of the beams in phase,
- a frequency generator (104, 204, 304, 404, 504) for driving the phase modulator,
- a frequency shifter (107, 207, 407) for shift the frequency of the second beam,
- a second frequency generator (108, 208, 308, 408, 508, 608) for driving the frequency shifter,
- a light combining device (106, 206, 306, 406) for combining the first and second beams,
- a resonant structure (105, 205, 305, 405, 505, 605) for receiving the combined beams, said resonant structure comprising a cavity whose length is adjustable,
wherein the system further comprises a feedback loop with a detector (114, 214, 314, 414, 514, 614) in optical communication with the combined beams, a controller (117, 217, 317, 417, 517, 617) for driving an actuator and an actuator (118, 218, 318, 418, 518, 618) for adjusting the cavity length.

## Description

### Field of the Invention

The invention relates to systems, devices and methods for the transfer of stability from an optical to a RF source.

### Background to the Invention and prior art known to the applicant(s)

The closest prior art may be identified in the following prior art article: Yibo Wang, Hongwei Zhang, Chenhao Zhao, Gang Zhao, Xiaojuan Yan, and Weiguang Ma, "Dual-mode stabilization for laser to radio-frequency locking by using a single-sideband modulation and a Fabry-Pérot cavity," Chin. Opt. Lett. 22, 011401- (2024).

In contrast with the prior art described, certain embodiments of the invention employ a stable laser to stabilise the phase of an RF source.

### Summary of the invention

In a first broad independent aspect, the invention provides a system for transferring stability from an optical to a RF source, the system comprising:
- a reference laser light source for generating a reference light beam,
- a light splitting device for splitting the reference light beam into two beams,
- a phase modulator for modulating a first one of the beams in phase,
- a frequency generator generating a first radio frequency (RF) source f₁ for driving the phase modulator,
- a frequency modulator or frequency shifter for modulating or shifting the frequency of the second beam,
- a second frequency generator generating a second radio frequency (RF) source Δf for driving the frequency modulator or frequency shifter,
- a light combining device for combining the first and second beams,
- a resonant structure for receiving the combined beams, said resonant structure comprising a cavity whose length is adjustable,
wherein the system further comprises a feedback loop with a detector in optical communication with the combined beams, a controller for driving an actuator and an actuator for adjusting the cavity length; whereby Δf is stabilised.

In certain embodiments, this configuration is particularly advantageous as it exploits the fact that the Free Spectra Range (FSR) of the optical system in question is determined by its length. The FSR is the spacing in optical frequency or wavelength between two successive reflected or transmitted optical intensity maxima or minima and for a cavity in vacuum is given by the formula: *Δυ_{FSR} = c*/*2L*
where c is the speed of light, and L the length of the cavity. As an example, a cavity of 15 cm has a FSR of about 1GHz.

In certain embodiments, this invention exploits this property by locking the length of cavity to the wavelength of a stable laser. This is possible because when the length of the cavity is a multiple of half the wavelength of the laser, a maximum (minimum) in the transmitted (reflected) light by the cavity is measured. Once the cavity is locked, optionally, a second laser may be injected into the cavity. This laser will have a frequency equal to the one of the first laser ± the n*FSR of the cavity where n is an integer. This difference in frequency can be obtained via several means such as an Acoustic Optical Modulator (AOM), a Single Sideband Modulator (SSM), Laser Frequency Offset Locking (LFOL) and more, in certain embodiments, all these techniques use a RF source to determine the difference in frequency between the two lasers.

In certain embodiments, a second laser will present a maximum (minimum) in the transmitted (reflected) light by the cavity that can be used to lock the frequency of the RF source.

In this way, the difference in frequency between the two laser is locked to the frequency of the first laser. In preferred embodiments, the optical system provides a means to transfer the stability of an optical source to an RF source in the electrical domain.

In a subsidiary aspect in accordance with the first broad independent aspect, the light source comprises two separate laser light sources.

In a further subsidiary aspect, part of the light generated by a first light source is combined with the light generated by a second light source.

In a further subsidiary aspect, a further light splitting device is provided to direct light in part to a further detector.

In a further subsidiary aspect, the second beam is subjected to a second phase modulator which receives an input from a third frequency generator.

In a further subsidiary aspect, the system further comprises a polarization controller for controlling the polarization of the combined beam prior to reaching the resonant structure.

In a further subsidiary aspect, the resonant structure comprises a pair of oppositely disposed mirrors whose spacing is adjustable dependent upon an actuator.

In a further subsidiary aspect, the actuator is a piezoelectric actuator.

In a further subsidiary aspect, the actuator comprises a Peltier element or a resistive heater.

In a further subsidiary aspect, the resonant structure comprises a ring resonator and its size is controllable by adjusting the temperature it is subjected to.

In a further subsidiary aspect, the or each phase modulator is an Electro-Optic Modulator (EOM).

In a further subsidiary aspect, the or each frequency generator is a radio frequency (RF) source.

In a further subsidiary aspect, the or each frequency modulator is an Acoustic Optical Modulator (AOM).

In a further broad independent aspect, the system for transferring stability from an optical to a RF source, the system comprises:
- a first laser light source for generating a first light beam,
- a second laser light source for generating a second light beam,
- the first laser light source having an integrated phase modulator for modulating the first light beam,
- a frequency generator generating a first radio frequency (RF) source for driving the integrated phase modulator,
- the second light source having an integrated frequency modulator for modulating the frequency of the second laser light beam,
- a second frequency generator generating a second radio frequency (RF) source Δf for driving the integrated frequency modulator,
- a light combining device for combining the first and second beams,
- a resonant structure for receiving the combined beams, said resonant structure comprising a cavity whose length is adjustable,
wherein the system further comprises a feedback loop with a detector in optical communication with the combined beams, a controller for driving an actuator and an actuator for adjusting the cavity length; whereby Δf is stabilised.

In a subsidiary aspect, the combined beam from the light combining device is fed directly to a circulator.

In further aspect, an embodiment of the invention provides a method of transferring the phase stability from an optical source to a radio frequency source, the method comprising the steps of generating a stable optical signal using a stable optical source; requiring a stable frequency for a radio frequency (RF) source; defining a Free Spectra Range (FSR) for a cavity based on its length; injecting a frequency adjustable laser into the cavity, the frequency of the laser being relative to a first laser and the FSR of the cavity; defining the frequency difference between the two lasers using a frequency generator; locking the difference in frequency between the two lasers by the frequency of the first laser, thereby transferring the stability of the optical source to the radio frequency source in the electrical domain.

In a subsidiary aspect, the method comprises the step of providing a stable optical source. In a further subsidiary aspect, the method comprises the step of providing an optical atomic clock.

In a further subsidiary aspect, the radio frequency source is selected from a group consisting of Direct Digital Synthesizer (DDS), a Voltage-Controlled Oscillator (VCO), a Crystal Oscillator (XO), a Temperature-Compensated Crystal Oscillator (TCXO), or Oven-Controlled Crystal Oscillator (OCXO).

In a further subsidiary aspect, the frequency adjustable laser is a second laser.

In a further subsidiary aspect, the frequency difference between the two lasers is obtained via a means selected from a group consisting of an Acoustic Optical Modulator (AOM), a single sideband modulator (SSM), and a Laser Frequency Offset Locking (LFOL) technique.

In a further subsidiary aspect in accordance with any of the preceding embodiments, the frequency generator is a RF source.

In a further subsidiary aspect, the cavity is locked to the wavelength of the stable laser.

In a further subsidiary aspect, the length of the cavity is a multiple of half the wavelength of the laser.

In a further subsidiary aspect in accordance with any of the preceding embodiments, a maximum or minimum in the transmitted or reflected light by the cavity is used to lock the frequency of the RF source.

In a further subsidiary aspect, the phase stability is transferred to the RF source in the electrical domain.

In a further subsidiary aspect, the method is employed to stabilize a variety of electronic devices that work with frequencies from kHz to GHz.

This configuration is particularly advantageous in certain embodiments as it provides a more efficient and a less complex solution compared to the use of a frequency comb.

### Brief Description of the Figures

Figure 1 shows a flowchart of the operations involved for transferring phase stability from an optical source to a radio frequency (RF) source.
Figure 2 shows a flowchart of the operations involved for transferring phase stability from an optical source to a radio frequency (RF) source.
Figure 3 shows an embodiment of a first system.
Figure 4 shows an embodiment of a second system.
Figure 5 shows an embodiment of a third system.
Figure 6 shows an embodiment of a fourth system.
Figure 7 shows an embodiment of a fifth system.
Figure 8 shows an embodiment of a sixth system.
Figure 9 shows an embodiment of a seventh system.

### Detailed Description of the Figures

Embodiments of the disclosure will be described below with reference to the accompanying drawings. It should be understood that the following description is intended to describe exemplary embodiments, and not to limit the claimed subject matter.

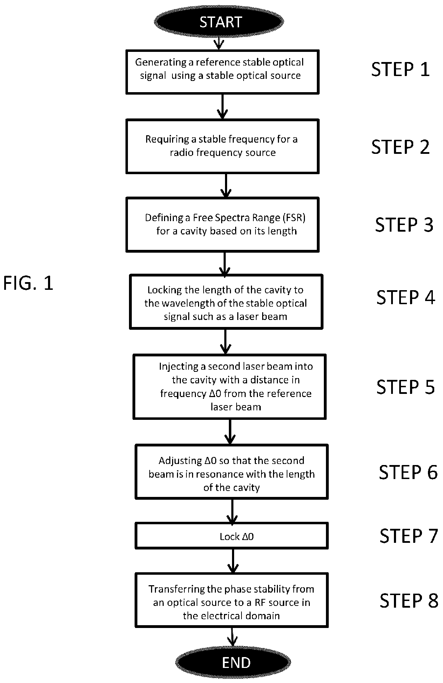

Figure 1 illustrates, in a flowchart, operations for transferring phase stability from an optical source to a radio frequency (RF) source.

Step 1 involves generating a stable optical signal, such as a laser beam, using an optical source. This optical source, which can be or be part of an optical atomic clock, produces a consistent laser beam with a frequency in the order of hundreds of terahertz (10¹⁴ Hz). The generation of this signal is the initial step in a process designed to transfer phase stability to a radio frequency (RF) source.

The laser beam produced by the optical source in Step 1 has a phase stability that is maintained over time. This stability is a key characteristic that is sought to be transferred to a radio frequency (RF) source, which operates at lower frequencies, typically ranging from kilohertz to gigahertz. The radio frequency (RF) source, as mentioned in Step 2, generates radio frequency signals and can be a Direct Digital Synthesizer (DDS), a Voltage-Controlled Oscillator (VCO), a Crystal Oscillator (XO), a Temperature-Compensated Crystal Oscillator (TCXO), or Oven-Controlled Crystal Oscillator (OCXO).

The process initiated in Step 1 sets the foundation for subsequent steps where the stability of the optical signal is transferred to the Radio Frequency (RF) domain. This transfer is aimed at providing stability to devices that require a stable frequency for their operation. The stable optical signal from Step 1 is used as a reference to achieve this goal, ensuring that the Radio Frequency (RF) source operates with a level of stability that is derived from the optical domain.

Step 2 involves the recognition of the need for a stable frequency output from a Radio Frequency (RF) source. This step is concerned with the requirement that a Radio Frequency (RF) source produces a consistent signal within a specified frequency range. Radio Frequency (RF) sources provide the reference signals required for clocking digital circuits, generating carrier waves for wireless communication, and producing precise and stable frequencies for various purposes. Without accurate oscillator frequencies, the performance and functionality of electronic devices would be severely compromised.

Step 3 involves the determination of the Free Spectral Range (FSR) for a cavity, which is calculated based on the cavity's length. The FSR represents the frequency spacing between successive resonant modes of the cavity and is given by the formula Δ*υ_{FSR}* = *c*/2*L,* where c is the speed of light and L is the length of the cavity. This step requires precise measurement of the cavity length and the application of the formula to ascertain the FSR, which is necessary for the subsequent steps in the stabilization process.

Step 4 involves the recognition of the need to ensure that the cavity is resonant with the laser light, allowing for the constructive interference at the resonant frequency. In order to satisfy this resonant requirement the cavity length must be an integer multiple of half the wavelength of the laser. This results in a peak in the transmitted light or a trough in the reflected light when the cavity is in resonance, which can be detected and utilized for frequency locking.

At least one of the objectives of these procedures is to establish a stable optical reference within the cavity that can be used to lock the frequency of a second, adjustable laser. This is accomplished by ensuring that the cavity's resonant condition is met and maintained, which is essential for the operation of the stabilization process.

Step 5 involves the process of introducing a second laser beam into an optical cavity, once the cavity is locked. This laser may optionally have a frequency equal to the one of the first laser ± Δf = n*FSR of the cavity, where n is an integer.

Step 6 involves the adjustment of the second laser beam's frequency to a specific multiple of the FSR of the cavity, which is determined by the cavity's physical length. In this manner, this second laser beam will be in resonance with the length of the cavity. The adjustment of its frequency allows setting the frequency offset between the first and second lasers. This precise frequency control is necessary to align the phase of the Radio Frequency (RF) source with the optical reference provided by the first laser, enabling the stabilization of the Radio Frequency (RF) source's frequency in the Radio Frequency (RF) domain. The frequency offset can be achieved through various methods, such as using an Acoustic Optical Modulator (AOM), a Single Sideband Modulator (SSM), or a Laser Frequency Offset Locking (LLOL) technique.

Step 7 involves the process of locking the frequency difference Δf between two lasers by using the frequency of the first laser. This step is characterized by several actions that are preferred in certain embodiments for the successful transfer of stability from an optical source to a radio frequency (RF) source, as will be seen in the following embodiments of this invention.

Step 8 involves the process where the phase stability of an optical source is transferred to a radio frequency (RF) source within the electrical domain. In certain embodiments, this step is the final action in a series of procedures designed to ensure that the RF source operates with stability derived from the optical source. The optical source, the RF source, and the systems that facilitate the stability transfer, including the cavity with a defined Free Spectral Range (FSR), the frequency adjustable second laser, and the Radio Frequency (RF) source acting as a frequency generator, are all integral to this step.

The actions include locking the cavity to the wavelength of the stable laser (Step 7), which ensures that the cavity's length is resonant with the laser's wavelength. This allows for precise control over the frequency of the second laser injected into the cavity. The frequency difference between the two lasers is defined using a frequency generator (Step 6), which is an RF source. Techniques such as Acoustic Optical Modulation (AOM), Single Sideband Modulation (SSM), or Laser Frequency Offset Locking (LFOL) are employed to achieve the desired frequency difference.

The frequency of the RF source is then locked by using a maximum or minimum in the transmitted or reflected light by the cavity. In at least one of the following embodiments this is detected by a photodiode, and the signal is used to control the RF source's frequency through a feedback loop involving a Proportional-Integral-Derivative (PID) controller and a piezoelectric actuator that adjusts the cavity length.

As a result of these procedures, the RF source's frequency is stabilized, which can now be used in various electronic devices that operate across a wide frequency range from kHz to GHz. This step provides a cost-effective and less complex solution compared to using a frequency comb and differs from other stabilization techniques by using the stable laser to stabilize the phase of the RF source.

All the following embodiments of this invention can be implemented in free space with discrete elements, in fibre, or on one or more photonic integrated circuits (PIC).

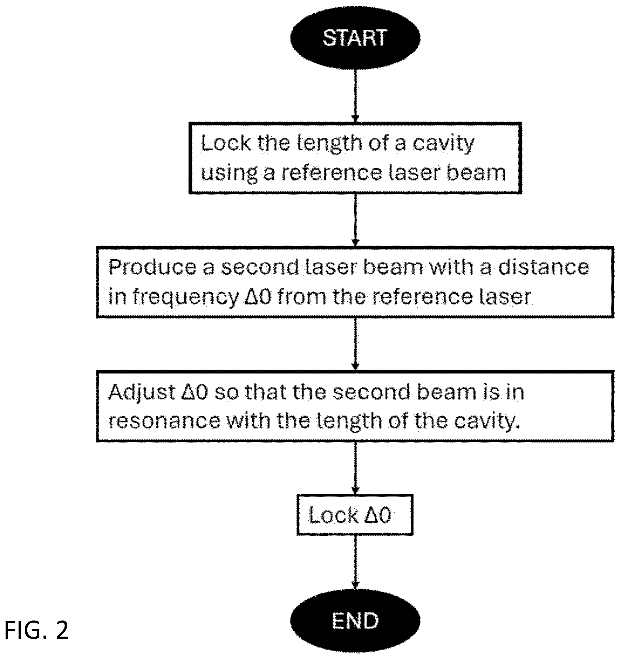

Figure 2 further summarises the method involved in transferring the phase stability of an optical source, as the one generated by an optical atomic clock, to a radio frequency (RF) source, such as a Direct Digital Synthesizer (DDS), a Voltage-Controlled Oscillator (VCO), a Crystal Oscillator (XO), a Temperature-Compensated Crystal Oscillator (TCXO), or Oven-Controlled Crystal Oscillator (OCXO). In a broad sense, the method locks the length of a cavity using a reference laser beam, produces a second laser beam with a distance in frequency Δf from the reference laser, and adjusts Δf so that the second beam is in resonance with the length of the cavity, and thereafter locking the distance in frequency Δf.

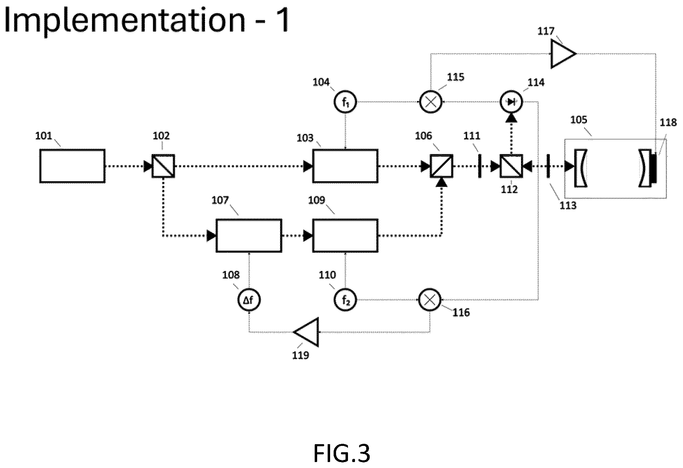

Figure 3 shows an embodiment of a device, generally referenced Implementation 1, for the transfer of stability from an optical to a RF source. In this embodiment the beam of a reference laser 101 is divided in two beams by a beam splitter 102. One of the beams is modulated in phase by an Electro-Optic Modulator (EOM) 103 driven by an RF source 104 having frequency f1. This modulation is advantageous to lock the length of the cavity 105 of resonant structure. The second beam is shifted in frequency by an Acoustic Optical Modulator (AOM) 107, driven by a second RF source 108 with frequency Δf. This source is the one that will be stabilized by the device. The second beam is modulated in phase by a second Electro-Optic Modulator (EOM) 109, driven by the RF source 110 with frequency f2. The two beams are then recombined by a beam splitter 106. The polarization of the combined beam is then controlled by a λ/2 plate 111. The polarised combined beam is then split by a polarising beam splitter 112. The transmitted beams are then injected into the cavity 105 after passing in a λ/4 plate 113. The reflection of the beams by the cavity is monitored by a photodiode (PD) 114. The signal from the photodiode (PD) 114 is then sent to the frequency mixers 115 after suitable amplification together with the signal generated by the RF source 104. This signal is used as input to the Proportional Integral Derivative (PID) controller 117 that drives the piezoelectric actuator 118 that keeps the length between the two mirrors of the resonant structure which define the cavity stable. The signal from the photodiode (PD) 114 is also sent to the frequency mixer 116 together with the signal generated by the radio frequency (RF) source 110. This signal is used as input to the Proportional Integral Derivative (PID) controller 119 that controls the frequency Δf generated by the RF source 108. In a preferred embodiment, the mixer 116 generates an error signal that presents a zero-crossing when the second beam has a frequency difference from the first one of n Free Spectral Range (FSR). The PID uses the error signal to keep this frequency stable.

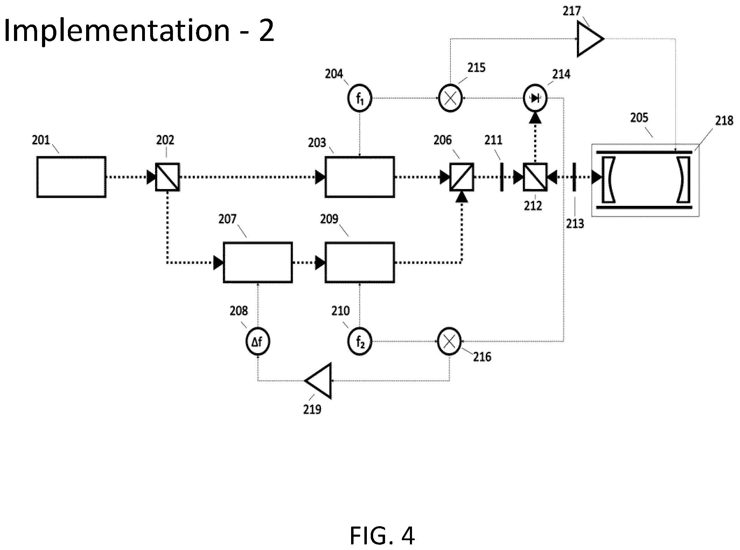

Figure 4 illustrates implementation 2. In this embodiment, the beam of a reference laser 201 is divided in two beams by a beam splitter 202. One of the beams is modulated in phase by an Electro-Optic Modulator (EOM) 203 driven by an RF source 204 having frequency f1. This modulation is preferred to lock the length of the cavity 205. The second beam is shifted in frequency by an Acoustic Optical Modulator (AOM) 207, driven by a second RF source 208 with frequency Δf. This source is the one that will preferably be stabilized by the device. The second beam is modulated in phase by a second Electro-Optic Modulator (EOM) 209, driven by the RF source 210 with frequency f2. The two beams are then recombined by a beam splitter 206. The polarization of the combined beam is then controlled by a λ/2 plate 211 and then split by a polarising beam splitter 212. The transmitted beams are then injected into a resonant structure comprising a cavity 205 after optionally passing in a λ/4 plate 213. The reflection of the beams by the cavity is monitored by a photodiode (PD) 214. The signal from the PD 214 is then sent to the frequency mixers 215 after suitable amplification together with the signal generated by the RF source 204. This signal is used as input to the Proportional Integral Derivative (PID) controller 217 that drives the resistive heater 218, or alternatively a Peltier element, that keeps the length between the two mirrors of the cavity stable by changing the temperature of the cavity. The signal from the PD 214 is also sent to the frequency mixer 216 together with the signal generated by the RF source 210. This signal is used as input to the Proportional Integral Derivative (PID) controller 219 that controls the frequency Δf of the RF source 208. In a preferred embodiment, the mixer 216 generates an error signal that presents a zero-crossing when the second beam has a frequency difference from the first one of n Free Spectral Range (FSR). The PID uses the error signal to keep this frequency stable.

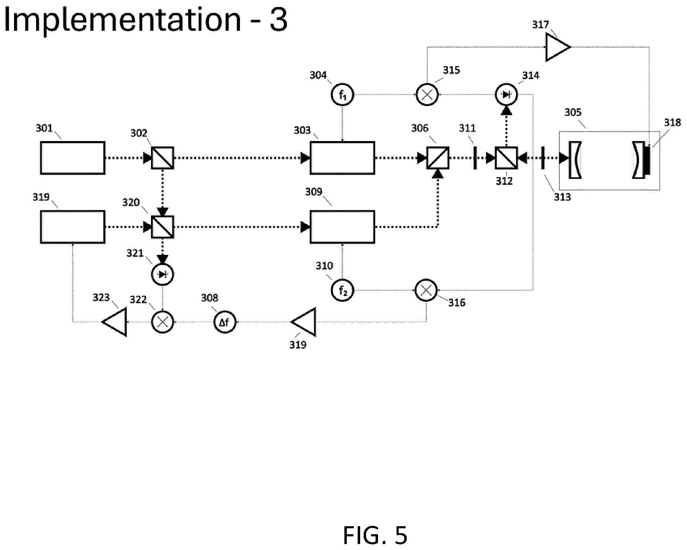

Figure 5 shows an embodiment of a third system implementation. The beam of a reference laser 301 is divided in two beams by a beam splitter 302. Part of the light generated by the laser 301 is modulated in phase by an Electro-Optic Modulator so called EOM 303 driven by an RF source having frequency f1. This modulation is required to lock the length of the cavity 305 of the resonant structure. In this embodiment, the second laser beam is generated by an additional laser 319 instead of being obtained from a single laser as in previous embodiments. The light generated by the second laser 319 is modulated in phase by an Electro-Optic Modulator (EOM) 309, driven by the RF source 310 with frequency f2. Part of the light exiting the Electro-Optic Modulator (EOM) 309 is combined with the light generated by the reference laser 301 via a beam splitter 320. The two beams respectively from Electro-Optic Modulator (EOM) 303 and beam splitter 320 are then recombined by a beam splitter 306. The polarization of the combined beam is than controlled by a λ/2 plate 311 and the resultant beam is then split by a polarising beam splitter 312. The transmitted beams are then injected into the cavity 305 after passing in an optional λ/4 plate 313. The reflection of the beams by the cavity is monitored by a photodiode (PD) 314. The signal from the PD 314 is then sent to the frequency mixers 315 after suitable amplification together with the signal generated by the RF source 304. This signal is used as input to the Proportional Integral Derivative (PID) controller 317 that drives the piezoelectric actuator 318 that keeps the length between the two mirrors of the cavity stable. The signal from the PD 314 is also sent to the frequency mixer 316 together with the signal generated by the RF source 310. This signal is used as input to the Proportional Integral Derivative (PID) controller 319 that controls the frequency Δf generated by the RF source 308. The combined light from the beam splitter 320 is also detected by a photodiode (PD) 321. The signal from the photodiode (PD) 321 is then sent to the frequency mixers 322 after suitable amplification together with the signal generated by a RF source 308. This signal exiting 308 is used as input to the Proportional Integral Derivative (PID) controller 323 that controls the frequency of the second laser 319. In a preferred embodiment, the mixer 316 generates an error signal that presents a zero-crossing when the second beam has a frequency difference from the first one of n Free Spectral Range (FSR). The PID uses the error signal to keep the Δf frequency stable.

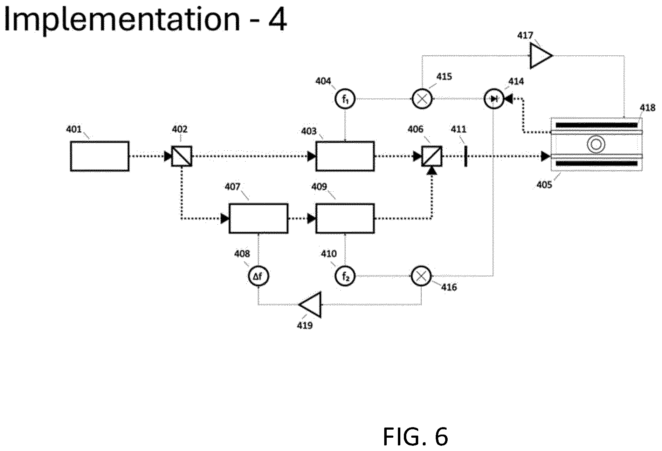

Figure 6 shows a fourth embodiment of an optical system. In this embodiment, the beam of a reference laser 401 is once again divided in two beams by a beam splitter 402. One of the beams is modulated in phase by an Electro-Optic Modulator (EOM) 403 driven by an RF source 404 having frequency f1. This modulation is preferably provided to lock the length of the cavity 405 realised on a photonic integrated circuit containing a ring resonator. The second beam is shifted in frequency by an Acoustic Optical Modulator (AOM) 407, driven by a second RF source 408 with frequency Δf. This source is the one that will be stabilized by the device. The second beam is modulated in phase by a second Electro-Optic Modulator (EOM) 409, driven by the RF source 410 with frequency f2. The two beams are then recombined by a beam splitter 406. The combined beam exiting the beam splitter 406 is then injected into the cavity 405 after solely passing in a λ/2 plate 411, which controls the polarization of this combined beam. The reflection of the beams by the cavity of the resonant structure is monitored by a photodiode (PD) 414. The signal from the PD 414 is then sent to the frequency mixers 415 after suitable amplification together with the signal generated by the RF source 404. This signal is used as input to the Proportional Integral Derivative (PID) controller 417 that drives thermal actuator such as a heating peltier or element 418 that keeps the length of the ring resonator within 405, stable by changing the temperature of the of the photonic integrated circuit. The signal from the PD 414 is also sent to the frequency mixer 416 together with the signal generated by the RF source 410. This signal is used as input to the Proportional Integral Derivative (PID) controller 419 that controls the frequency Δf generated by the RF source 408. In a preferred embodiment, the mixer 416 generates an error signal that presents a zero-crossing when the second beam has a frequency difference from the first one of n Free Spectral Range (FSR). The PID uses the error signal to keep the Δf frequency stable.

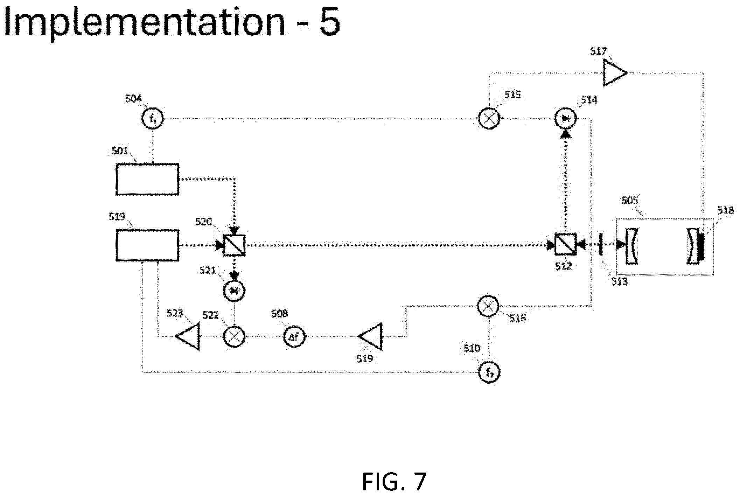

Figure 7 shows an optical system in accordance with a fifth embodiment. The beam of a reference laser 501 is fed into a beam splitter 520. In this embodiment, the modulation required to lock the cavity to the reference laser 501 is obtained by direct modulation of the reference laser 501 by means of an RF source 504 directly connected to it. In this embodiment, the second laser beam is generated by an additional laser 519. Part of the light generated by the laser 519 is combined with the light generated by the reference laser 501 via a beam splitter 520. In this embodiment, the modulation required to lock the second laser 519 to the cavity 505 is obtained by direct modulation of the second laser 519 by means of a RF source 510 directly connected to it, therefore the combined beam from the beam splitter 520 is fed directly to a beam splitter 512. The transmitted beams are then injected into the cavity 505 of a resonant structure after passing in a λ/4 plate 513. The reflection of the beams by the cavity is monitored by a photodiode (PD) 514. The signal from the PD 514 is then sent to the frequency mixers 515 after suitable amplification together with the signal generated by the RF source 504, which is connected directly to the reference laser 501. This signal is used as input to the Proportional Integral Derivative (PID) controller 517 that drives the piezoelectric actuator 518 that keeps the length between the two mirrors of the cavity stable. The signal from the PD 514 is also sent to the frequency mixer 516 together with the signal generated by the RF source 510, which is directly connected to the second laser to modulate its frequency in order to lock the second laser to the cavity. This signal is used as input to the Proportional Integral Derivative (PID) controller 519 that controls the frequency Δf generated by the RF source 508. The combined light from the beam splitter 520 is also detected by a photodiode (PD) 521. The signal from the PD 521 is then sent to the frequency mixers 522 after suitable amplification together with the signal generated by a RF source 508. This signal exiting 522 is used as input to the Proportional Integral Derivative (PID) controller 523 that controls the frequency of the second laser 519. In a preferred embodiment, the mixer 616 generates an error signal that presents a zero-crossing when the second beam has a frequency difference from the first one of n Free Spectral Range (FSR). The PID uses the error signal to keep the Δf frequency stable.

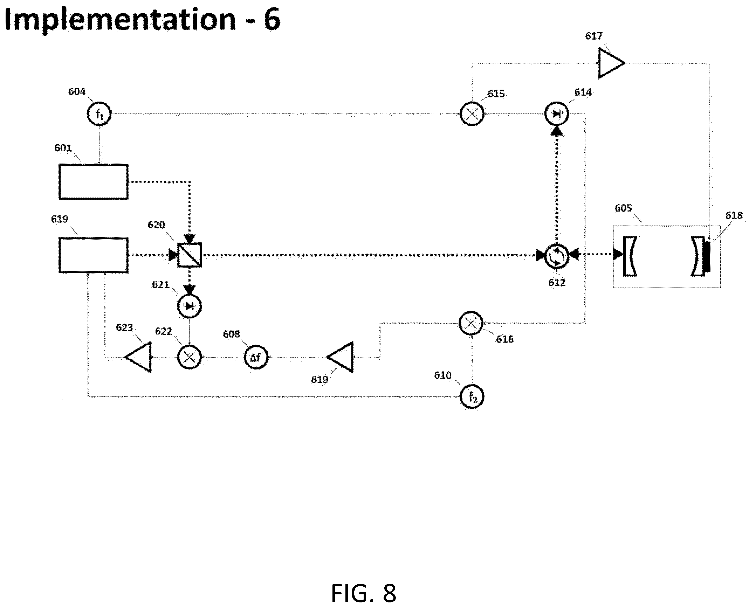

Figure 8 shows a sixth embodiment of the optical system. The beam of a reference laser 601 is fed into a beam splitter 620. In this embodiment, the modulation required to lock the cavity to the reference laser is obtained by direct modulation of the reference laser 601 by means of a RF source 604 directly connected to it. In this embodiment, the second laser beam is generated by an additional laser 619. Part of the light generated by the laser 619 is combined with the light generated by the reference laser 601 via a beam splitter 620. In this embodiment, the modulation required to lock the second laser 619 to the cavity 605 is obtained by direct modulation of the second laser 619 by means of a RF source 610 directly connected to it, therefore the combined beam from the beam splitter 620 is fed directly to a circulator 612. The transmitted beam from the circulator 612 is then injected directly into the cavity 605. The reflection of the beams by the cavity is monitored by a photodiode (PD) 614. The signal from the PD 614 is then sent to the frequency mixers 615 after suitable amplification together with the signal generated by the RF source 604, which is connected directly to the reference laser 601. This signal is used as input to the Proportional Integral Derivative (PID) controller 617 that drives the piezoelectric actuator 618 that keeps the length between the two mirrors of the cavity stable. The signal from the PD 614 is also sent to the frequency mixer 616 together with the signal generated by the RF source 610, which is directly connected to the second laser to modulate its frequency in order to lock the second laser to the cavity. This signal is used as input to the Proportional Integral Derivative (PID) controller 619 that controls the frequency Δf generated by the RF source 608. The combined light from the beam splitter 620 is also detected by a photodiode (PD) 621. The signal from the PD 621 is then sent to the frequency mixers 622 after suitable amplification together with the signal generated by a RF source 608. This signal exiting 622 is used as input to the Proportional Integral Derivative (PID) controller 623 that controls the frequency f2 of the second laser 619.

In a preferred embodiment, the mixer 616 generates an error signal that presents a zero-crossing when the second beam has a frequency difference from the first one of n Free Spectral Range (FSR). The PID uses the error signal to keep the Δf frequency stable.

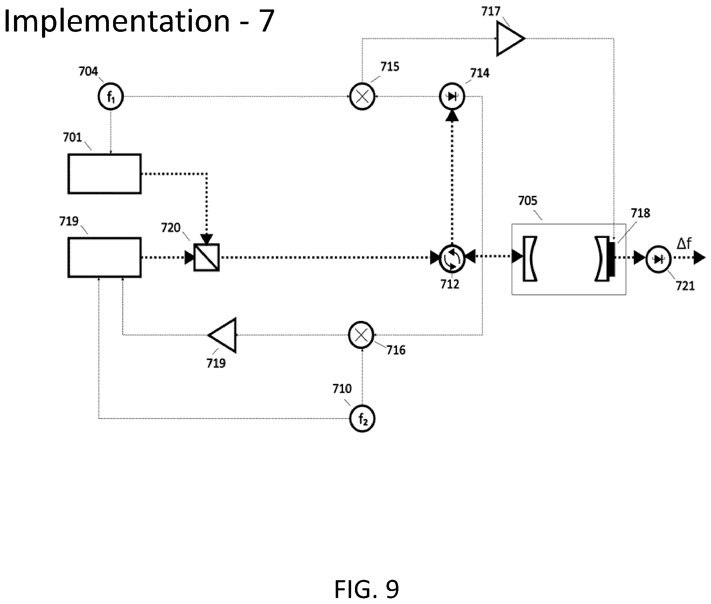

Figure 9 illustrates a seventh embodiment of the optical system. In this implementation, a reference laser 701 is modulated by an external RF source 704, and its beam is combined with the output of a second laser 719 using a beam splitter 720. Unlike the sixth embodiment, in which frequency feedback for both lasers required separate detection and control loops, this embodiment eliminates the need for the mixer 622 and PID controller 623 associated with the second laser.

The combined beam from the reference laser 701 and second laser 719 is injected into the optical cavity 705 via a circulator 712. The cavity 705 is stabilized in length by a piezoelectric actuator 718, which is driven by a PID controller 717. This controller receives input from a photodiode 714 that monitors the light reflected by the cavity. The signal from photodiode 714 is processed by a frequency mixer 715, where it is mixed with the modulation signal from RF source 704 to generate the feedback signal for stabilizing the cavity.

The second laser 719 is directly modulated by a separate RF source (710), and its beam is injected into the cavity alongside the reference beam. The frequency of the second laser 719 is stabilized by the PID controller 719, This controller receive input from a photodiode 714 that monitors the light reflected by the cavity. The signal from photodiode 714 is processed by a frequency mixer 716 where it is mixed with the modulation signal from RF source 710 to generate the feedback signal for stabilizing the second laser 719. A key feature of this embodiment is that the output signal is derived from the frequency difference of the two laser beams exiting the optical cavity, rather than from a separate photodetection and feedback loop. This signal is captured by photodiode 721, whose output reflects the frequency difference Δf between the two lasers.

Importantly, in this configuration, the second laser 719 will only be transmitted through the cavity 705 if its frequency differs from that of the reference laser 701 by an integer multiple of the cavity's Free Spectral Range (FSR). Since the FSR is determined by the physical length of the cavity 705, which is actively stabilized by locking it to the reference laser 701, the frequency resulting from the mixing of the two lasers is inherently stable. This locking mechanism eliminates the need for an additional PID loop to control the output frequency Δf , thereby simplifying the system architecture without compromising frequency stability. Moreover, in this implementation, all the residual noise present in laser 701 and 719 are suppressed reducing the noise in the RF produced.

In a further broad independent aspect, an embodiment of the invention includes a system for transferring stability from an optical to a RF source, the system comprising:
- a first laser light source (for example 701) for generating a first light beam,
- a second laser light source (for example 719) for generating a second light beam,
- a first frequency generator (for example 704) generating a first radio frequency (RF) source for modulating the first laser light source;
- a second frequency generator (for example 710) generating a second radio frequency (RF) source for modulating the second laser light source;
- a light combining device (for example 720) for combining the first and second beams,
- a circulator (for example 712) through which the combined first and second beam pass;
- a resonant structure (for example 705) for receiving the combined beams, said resonant structure comprising a cavity whose length is adjustable,
- a controller (for example 717) for driving an actuator (for example 718) for adjusting the cavity length;
- the output from the resonant structure being captured by a photodiode (for example 721) whose output reflects the frequency difference Δf between the two laser light sources.

## Claims

1. A system for transferring stability from an optical to a RF source, the system comprising:
- a reference laser light source (101, 201, 301, 401, 501, 601) for generating a reference light beam,
- a light splitting device (102, 202, 302, 402, 520, 620) for splitting the reference light beam into two beams,
- a phase modulator (103, 203, 303, 403) for modulating a first one of the beams in phase,
- a frequency generator (104, 204, 304, 404, 504) generating a first radio frequency (RF) source f₁ for driving the phase modulator,
- a frequency shifter (107, 207, 407) for shifting the frequency of the second beam,
- a second frequency generator (108, 208, 308, 408, 508, 608) generating a second radio frequency (RF) source Δf for driving the frequency shifter,
- a light combining device (106, 206, 306, 406) for combining the first and second beams,
- a resonant structure (105, 205, 305, 405, 505, 605) for receiving the combined beams, said resonant structure comprising a cavity whose length is adjustable,
wherein the system further comprises a feedback loop with a detector (114, 214, 314, 414, 514, 614) in optical communication with the combined beams, a controller (117, 217, 317, 417, 517, 617) for driving an actuator and an actuator (118, 218, 318, 418, 518, 618) for adjusting the cavity length; whereby Δf is stabilised.

2. The system according to claim 1, wherein the light source comprises two separate laser light sources (301, 319, 501, 519, 601, 619).

3. The system according to claim 2, wherein part of the light generated by a first light source (301, 501, 601) is combined with the light generated by a second light source (319, 519, 619).

4. The system according to claim 3, wherein a further light splitting device (320, 520, 620) is provided to direct light in part to a further detector (321, 521, 621).

5. The system according to any one of the preceding claims, wherein the second beam is subjected to a second phase modulator (109, 209, 309, 409) which receives an input from a third frequency generator (110, 210, 310, 410, 510, 610).

6. The system according to any one of the preceding claims, further comprising a polarization controller (111, 113, 211, 213, 311, 313, 411, 513) for controlling the polarization of the combined beam prior to reaching the resonant structure.

7. The system according to any one of the preceding claims, wherein the resonant structure comprises a pair of oppositely disposed mirrors whose spacing is adjustable dependent upon an actuator.

8. The system according to any one of the preceding claims, wherein the actuator (118, 218, 318, 418, 518, 618) is a piezoelectric actuator.

9. The system according to any one of the preceding claims, wherein the actuator comprises a Peltier element or a resistive heater.

10. The system according to any one of the preceding claims, wherein the resonant structure comprises a ring resonator and its size is controllable by adjusting the temperature it is subjected to.

11. The system according to any one of the preceding claims, wherein the or each phase modulator is an Electro-Optic Modulator (EOM).

12. The system according to any one of the preceding claims, wherein the or each frequency generator is a radio frequency (RF) source.

13. The system according to any one of the preceding claims, wherein the or each frequency modulator is an Acoustic Optical Modulator (AOM).

14. A system for transferring stability from an optical to a RF source, the system comprising:
- a first laser light source (501, 601) for generating a first light beam,
- a second laser light source (519, 619) for generating a second light beam,
- the first laser light source having an integrated phase modulator for modulating the first light beam,
- a frequency generator (504, 604) generating a first radio frequency (RF) source for driving the integrated phase modulator,
- the second light source having an integrated frequency modulator for modulating the frequency of the second laser light beam,
- a second frequency generator (508, 608) generating a second radio frequency (RF) source Δf for driving the integrated frequency modulator,
- a light combining device (520, 620) for combining the first and second beams,
- a resonant structure (505, 605) for receiving the combined beams, said resonant structure comprising a cavity whose length is adjustable,
wherein the system further comprises a feedback loop with a detector (514, 614) in optical communication with the combined beams, a controller (517, 617) for driving an actuator and an actuator (518, 618) for adjusting the cavity length; whereby Δf is stabilised.

15. The system according to claim 14, wherein the combined beam from the light combining device is fed directly to a circulator (612).
